# FASCICULE DE BREVET EUROPEEN

(11) **EP 2 791 486 B1**
(45) Date de publication et mention de la délivrance du brevet: **27.04.2016**
(21) Numéro de dépôt: 12805441.8
(22) Date de dépôt: 10.12.2012
(51) Int. Cl.: F01N 13/00, F01N 13/14, F01N 13/18, F02B 75/04, F02B 77/11, F02B 77/08, B60R 13/08

(54) **DISPOSITIF DE SECURITE DE FONCTIONNEMENT D'UN ECRAN DE POT CATALYTIQUE**
SICHERHEITSVORRICHTUNG ZUM BETRIEB EINES KATALYSATORSIEBES
SAFETY DEVICE FOR OPERATING A CATALYTIC CONVERTER SCREEN

(30) Priorité: 16.12.2011 FR 1161801
(43) Date de publication de la demande: 22.10.2014
(73) Titulaire: Renault S.A.S., 92100 Boulogne-Billancourt (FR)
(72) Inventeur: HOTTEBART, Pascal, F-95610 Eragny (FR); GATEAU, Jean-Luc, F-78640 Saint Germain de la Grange (FR)
(86) Numéro de dépôt international: PCT/EP2012/074898
(87) Numéro de publication internationale: WO 2013/087551

(56) Documents cités:
- EP-A1- 1 788 215
- EP-A1- 2 070 771
- JP-A- 8 296 436
- US-A1- 2006 219 433
- US-A1- 2007 280 780
- US-A1- 2011 067 952

## Description

### Domaine technique de l'invention

La présente invention concerne un moteur à combustion interne de véhicule automobile et les protections extérieures de pot catalytique monté à côté du moteur.

L'invention concerne plus particulièrement un dispositif de protection d'un orifice disposé sur un écran de protection de pot catalytique, ledit orifice permettant la mise en place d'un moyen de mesure de paramètre de fonctionnement d'un pot catalytique.

### Etat de la technique

Les moteurs à combustion interne sont soumis à des normes de protection environnementale de plus en plus sévères. Ils sont de ce fait équipés d'accessoires et d'équipement pour améliorer les dépollutions en sortie de moteur. Le pot catalytique fait partie de ces équipements et il est disposé en aval du moteur dans le sens d'écoulement des gaz. Le fonctionnement du pot catalytique permet de diminuer les émissions de 3 polluants : le monoxyde de carbone (CO toxique), les oxydes d'azote (précurseurs de l'ozone) ainsi que des hydrocarbures imbrûlés (polluants et parfois mutagènes et cancérogènes). Il est de ce fait contrôlé par la mise en place de moyens de mesure tels que des sondes de température.

Le pot catalytique est également le siège de hautes températures car il est disposé juste à la sortie d'un collecteur d'échappement des gaz issus du moteur. Au moins un écran thermique est donc disposé sur au moins une face extérieure du pot catalytique pour la protection de l'environnement à l'encontre dudit pot.

L'écran thermique comprend des orifices de passage pour la fixation des moyens de mesures notamment de mesures de température, lesdits orifices sont dimensionnés de façon assez large afin de prendre en compte les dispersions des tolérances des pièces qui sont fixées sur le pot catalytique.

Le pot catalytique est généralement disposé à proximité d'équipements moteur tels que des conduites de retour d'huile qui peuvent comprendre plusieurs parties avec des brides de liaison entre lesdites parties. Des fuites de liquides inflammables, par exemple de l'huile, peuvent alors se produire au niveau de ces brides de liaison et tomber sur l'écran thermique puis sur le pot catalytique par l'orifice aménagé pour la fixation de moyens de mesure, ce qui est source d'incendies.

On connait des moyens de fixation de l'écran thermique. La publication EP 1 788 215 A divulgue un adaptateur fixé à l'écran thermique et placé autour de l'orifice pour le passage de moyen de mesure.

Un inconvénient de ce système est que la fixation de la coupelle sur l'écran thermique nécessite un outil spécial.

Un autre inconvénient de ce système est la forme convexe de la coupelle qui peut recueillir du liquide inflammable.

### Bref résumé de l'invention

Un but de l'invention est de pallier ces inconvénients et l'invention a pour objet un dispositif de protection des orifices aménagés dans un écran thermique de pot catalytique simple à fabriquer et facile à mettre en place sur l'écran thermique, le dispositif étant adapté au maintien de tubes et/ou de câbles disposés à proximité du pot catalytique.

L'objet de l'invention est caractérisé plus particulièrement par un dispositif de sécurité de fonctionnement de pot catalytique comprenant :
- un écran thermique installé sensiblement sur une partie de la paroi extérieure du pot catalytique et comportant un orifice destiné à être traversé par un moyen de mesure fixé sur le pot catalytique, ledit moyen de mesure comportant une embase sensiblement cylindrique destinée au contact avec le pot catalytique,
- un moyen de sécurité destiné à être disposé sur l'écran thermique,
caractérisé en ce que le moyen de sécurité comporte une plaque présentant un orifice circulaire de diamètre supérieur au diamètre de l'embase, l'orifice étant bordé par une lèvre ; ledit dispositif de sécurité disposant par ailleurs de moyens de fixation de la plaque à l'écran thermique de manière à ce que la lèvre entoure l'embase avec un jeu minimal.

Selon des caractéristiques particulières de l'invention,
- le moyen de sécurité comporte des nervures de rigidification,
- le moyen de sécurité comporte un orifice oblong à distance de l'orifice circulaire.
- les moyens de fixation de la plaque comprennent une vis de fixation aménagée à la surface de l'écran thermique et tournée vers l'extérieur du pot catalytique, le pied de la vis étant adapté pour traverser un orifice oblong aménagé dans la plaque à distance de l'orifice circulaire, un écrou permettant de bloquer la plaque contre l'écran thermique par coopération avec le pied de la vis.
- -le moyen de sécurité est obtenu depuis une plaque en acier.
- -le moyen de sécurité recouvre une zone en saillie de l'écran thermique.
- Le moyen de sécurité comporte au moins un moyen de maintien de câblages ou de tubes.
- Le moyen de sécurité est prolongé latéralement par au moins une branche comportant au moins deux mâchoires aptes au maintien en position d'un câble ou d'un tube cylindrique.
- Les mâchoires ont une élasticité en flexion.
- Les mâchoires sont mobiles en pivotement.

### Brève description des figures

La figure 1 est une vue schématique d'ensemble du pot catalytique
La figure 2 est une vue schématique d'une portion d'un écran thermique.
La figure 3 est une vue schématique de coupe transversale du moyen de sécurité monté sur l'écran thermique.
La figure 4 est une vue schématique de dessus du moyen de sécurité selon un premier mode de réalisation.
La figure 5 est une vue schématique du moyen de sécurité comportant un moyen de maintien de câble ou de tube selon un second mode de réalisation.

### Description détaillée des figures

Les mêmes éléments apparaissant dans des figures différentes gardent les mêmes références.

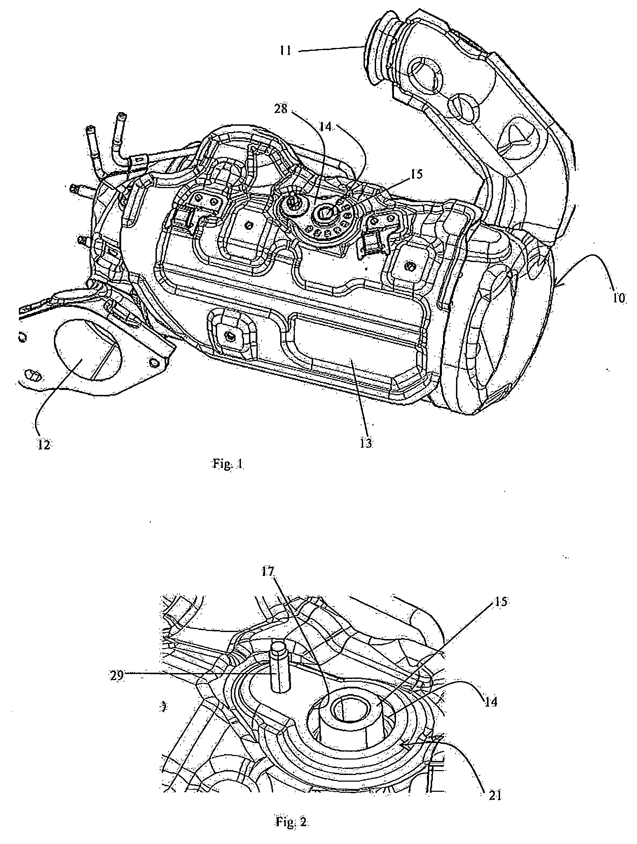

Selon la figure 1, un pot catalytique 10 est monté à côté d'un moteur (non présenté) à combustion interne, en aval selon le sens d'écoulement des gaz d'un collecteur de gaz d'échappement (non présenté). Les gaz traversent le pot catalytique depuis l'entrée 11 à la sortie 12. Issus directement de la combustion, les gaz sont très chauds et un écran thermique 13 est aménagé sur une portion de paroi extérieure du pot catalytique 10 afin de protéger l'environnement.

Un orifice 14 est aménagé dans l'écran thermique 13 en regard avec un puits de fixation 16 d'un moyen (non représenté) de mesure de fonctionnement du pot catalytique. Dans l'exemple présent, ce moyen de mesure peut être une sonde de température destinée à être fixée dans le puits de fixation pour relever les évolutions de température à l'intérieur du pot catalytique 10. Une partie du moyen de mesure dépasse de l'écran thermique 13 et est connecté par exemple à un système de commande électronique (non représenté).

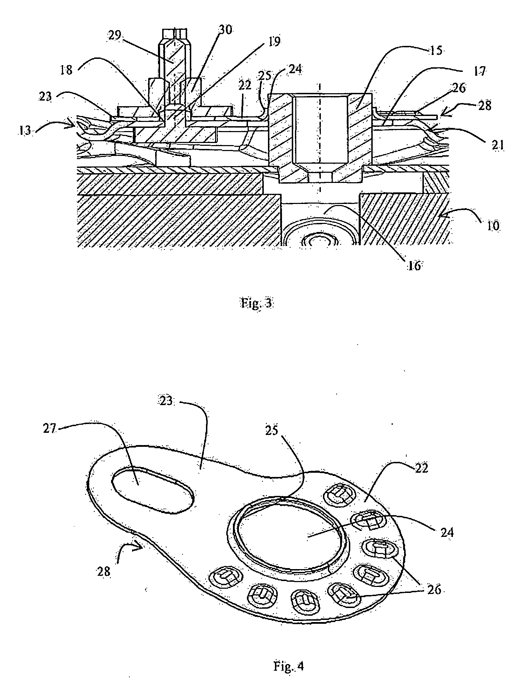

Selon les figures 2 et 3, une embase 15 est fixée sur le pot catalytique au dessus du puits de fixation. Ladite embase est de forme sensiblement tubulaire et dépasse de la paroi de l'écran thermique 13. Elle est adaptée pour accueillir le moyen de mesure qui la traverse pour d'un côté se loger dans le puits de fixation 16 et de l'autre côté dépasser sensiblement l'écran thermique 13. L'embase est préférentiellement en acier.

Selon la figure 3, l'écran thermique 13 comprend une plaque de tôle acier couvrant une partie de la paroi du pot catalytique 10, qui comprend des zones en saillie et des nervures afin d'améliorer la rigidité. Une zone en saillie 21 de l'écran thermique est disposée de façon préférentielle au dessus du puits de fixation 16 installé dans le pot catalytique.

Dans cette zone 21, un premier orifice 17 de diamètre sensiblement supérieur au diamètre de l'embase 15 est réalisé en regard avec le puits de fixation 16 et est destiné à être traversé par l'embase 15.

L'écran thermique comporte des moyens de fixation d'un moyen de sécurité destiné à empêcher le passage de liquide inflammable vers le pot catalytique par l'orifice 17. Lesdits moyens de fixation comportent un deuxième orifice 18 réalisé dans ladite zone en saillie à distance du premier orifice 17, une vis de fixation 19 et un écrou. La vis de fixation 19 traverse l'orifice 18 de manière à ce que le pied de vis 29 soit tourné à l'opposé du pot catalytique 10 et la tête de ladite vis 19 disposée entre l'écran thermique 13 et le pot catalytique 10 peut être soudée à l'écran thermique 13.

Selon un premier mode de réalisation présenté en figure 4, le moyen de sécurité 28 comprend un premier plateau 22 de forme sensiblement circulaire et de diamètre sensiblement supérieur au diamètre de l'orifice 17. Ce premier plateau est prolongé selon une portion de bordure par un deuxième plateau 23 de forme également sensiblement circulaire et de diamètre dans cet exemple inférieur au diamètre du premier plateau 22. La surface totale du moyen de sécurité 28 est sensiblement supérieure à la surface de la zone 21 en saillie.

Le premier plateau 22 comprend un orifice circulaire 24 prolongé par une lèvre 25 circulaire d'axe sensiblement orthogonal au plan du plateau 22 et dont le diamètre intérieur est sensiblement égal au diamètre de l'embase 15 aux jeux près, la lèvre 25 est adaptée pour entourer ladite embase 15. La hauteur de la lèvre 25 est telle que l'embase dépasse de la lèvre à la fixation du moyen de sécurité sur la plaque thermique.

On entend par lèvre une bordure en saillie ou un tube cylindrique dont la hauteur est telle que l'embase 15 dépasse des deux côtés dudit tube.

Le premier plateau 22 comprend des nervures 26 de rigidification qui dans ce mode de réalisation sont disposées de façon radiale par rapport à l'orifice circulaire 24. D'autres types de nervures ou de moyens de rigidification sont possibles sans pour autant modifier l'invention. Le plateau rendu plus rigide peut être monté de manière plus aisée sur l'écran thermique.

Le deuxième plateau 23 comprend un orifice oblong 27 destiné au passage du pied de la vis de fixation 19.

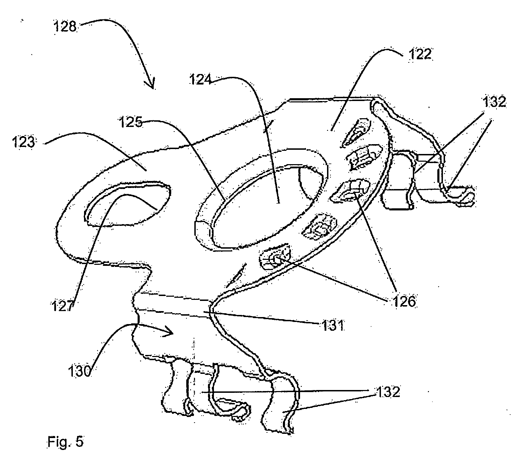

Selon un second mode de réalisation présenté en figure 5, le système de sécurité 128 comprend un premier plateau 122 et un deuxième plateau 123 analogues au premier et deuxième plateaux du premier mode de réalisation et reprenant les mêmes fonctions. On retrouve ainsi un orifice circulaire 124 prolongé par une lèvre 125 circulaire et des nervures de rigidification 126 sur le premier plateau 122 ainsi qu'un trou oblong 127 sur le deuxième plateau 123. Le premier 122 ou le deuxième 123 plateau est prolongé latéralement vers l'extérieur par une branche 130 recourbée vers un côté par rapport au plan dudit plateau, ledit côté est destiné à être opposé au pot catalytique une fois le moyen de sécurité mis en place sur la paroi de l'écran thermique.

La branche 130 comprend une partie commune 131 d'une longueur de façon préférentielle supérieure à 5 mm depuis laquelle s'étendent selon la même direction au moins deux mâchoires 132 mobiles en pivotement autour d'un axe sensiblement parallèle à l'axe reliant l'orifice oblong 127 à l'orifice 124 destiné à être traversé par l'embase 15, ou possédant une élasticité en flexion afin de pouvoir être écartées depuis une position initiale fermée pour entourer un câble ou tube. Les mâchoires une fois relâchées sont aptes au maintien en position du câble ou du tube (non représenté).

Le moyen de sécurité 28, 128 est préférentiellement obtenu par :
- découpe d'une plaque en acier, un acier à ressort comporte des caractéristiques mécaniques favorables pour ce type de pièce, lesdites caractéristiques mécaniques étant de manière préférentielle proches de celles de l'embase 15 et de l'écran thermique 13 afin de diminuer les jeux et/ou les contraintes entre les différentes pièces,
- emboutissage de la plaque.

Le mode de réalisation du moyen de sécurité 28, 128 est simple et peu onéreux.

L'installation du moyen de sécurité 28, 128 est consécutive à :
- l'installation de l'écran thermique 13 autour du pot catalytique 10, l'écran thermique comportant la zone en saillie 21 comprenant l'orifice 17 destiné à être traversé par le moyen de mesure et les moyens de fixation du moyen de sécurité 28, 128,
- la fixation de l'embase 15 dans le pot catalytique 10,
et comporte les étapes de :
- plaquage du moyen de sécurité sur l'écran thermique avec guidage par la lèvre 25, 125 entourant l'embase 15 du moyen de mesure et par le pied de vis 19 traversant l'orifice oblong 27, 127,
- vissage de l'écrou 30 sur la vis de fixation 19 pour maintenir le moyen de sécurité contre l'écran thermique.

Une fois le dispositif de sécurité en place autour du pot catalytique, les fuites éventuelles de liquide inflammable tombant sur l'écran thermique sont dirigées sur la surface de l'écran thermique sans risque d'atteindre le pot catalytique en passant par l'orifice de fixation de moyen de mesures.

L'objectif de l'invention est atteint : le dispositif de sécurité assure une protection contre des risques d'incendie par un contact de fluides inflammables avec un pot catalytique, siège de températures élevées, le dispositif comprenant un moyen de sécurité des orifices aménagés dans l'écran thermique pour la fixation de moyens de mesure, facile de réalisation et permet le maintien simple de câble ou tube disposé à proximité du pot catalytique sous la protection de l'écran thermique.

L'invention n'est pas réduite aux modes de réalisation présentés ci-dessus et d'autres modes de réalisation peuvent être suggérés dans l'esprit de l'homme du métier, par la forme du premier 22, 122 ou du deuxième plateau 23, 123 et/ou les dimensions du deuxième plateau qui peuvent être sensiblement différents de la description ci-dessus sans pour autant modifier l'invention. Le moyen de sécurité peut comporter une plaque recouvrant la surface de la zone 21 en saillie de l'écran thermique 13 et d'autres moyens de fixation peuvent assurer le blocage du moyen de sécurité contre l'écran thermique.

## Revendications

1. Dispositif de sécurité de fonctionnement de pot catalytique (10) comprenant :
- un écran thermique (13) installé sensiblement sur une partie de la paroi extérieure du pot catalytique et comportant un orifice (17) destiné à être traversé par un moyen de mesure fixé sur le pot catalytique, ledit moyen de mesure comportant une embase (15) sensiblement cylindrique destinée au contact avec le pot catalytique,
- un moyen de sécurité (28, 128) destiné à être disposé sur l'écran thermique,
**caractérisé en ce que** le moyen de sécurité (28, 128) comporte une plaque présentant un orifice circulaire de diamètre supérieur au diamètre de l'embase (15), l'orifice étant bordé par une lèvre (25, 125) ; ledit dispositif de sécurité disposant par ailleurs de moyens de fixation de la plaque à l'écran thermique de manière à ce que la lèvre entoure l'embase avec un jeu minimal.

2. Dispositif selon la revendication 1, **caractérisé en ce que** la plaque comporte des nervures (26, 126) de rigidification.

3. Dispositif selon l'une quelconque des revendications 1 ou 2, **caractérisé en ce que** les moyens de fixation de la plaque comprennent une vis de fixation (19) aménagée à la surface de l'écran thermique et tournée vers l'extérieur du pot catalytique (10), le pied de la vis étant adapté pour traverser un orifice oblong (27, 127) aménagé dans la plaque à distance de l'orifice circulaire, un écrou (30) permettant de bloquer la plaque contre l'écran thermique (13) par coopération avec le pied de la vis.

4. Dispositif selon l'une quelconque des revendications 1 à 3, **caractérisé en ce que** le moyen de sécurité (28, 128) est obtenu depuis une plaque en acier.

5. Dispositif selon l'une quelconque des revendications 1 à 4, **caractérisé en ce que** le moyen de sécurité recouvre une zone en saillie (21) de l'écran thermique.

6. Dispositif selon l'une quelconque des revendications 1 à 5, **caractérisé en ce que** le moyen de sécurité (128) comporte au moins un moyen de maintien de câblages ou de tubes.

7. Dispositif selon la revendication 6 **caractérisé en ce que** le moyen de sécurité est prolongé latéralement par au moins une branche (130) comportant au moins deux mâchoires (132) aptes au maintien en position d'un câble ou d'un tube cylindrique.

8. Dispositif selon la revendication 7 **caractérisé en ce que** les mâchoires (132) ont une élasticité en flexion.

9. Dispositif selon la revendication 7 **caractérisé en ce que** les mâchoires (132) sont mobiles en pivotement.

10. Moteur de véhicule automobile comportant un dispositif de sécurité de fonctionnement selon une quelconque des revendications 1 à 9.

## Patentansprüche

1. Sicherheitsvorrichtung zum Betrieb eines Katalysatorsiebes (10), die Folgendes umfasst:
- einen Wärmeschild (13), der im Wesentlichen auf einem Teil der Außenwand des Katalysatorsiebes installiert ist und eine Öffnung (17) umfasst, die dazu bestimmt ist, von einem Messmittel durchquert zu werden, das auf dem Katalysatorsieb befestigt ist, wobei das Messmittel einen Sockel (15) umfasst, der im Wesentlichen zylindrisch ist, der zum Berühren mit dem Katalysatorsieb bestimmt ist,
- ein Sicherheitsmittel (28, 128), das dazu bestimmt ist, auf dem Wärmeschild angeordnet zu sein,
**dadurch gekennzeichnet, dass** das Sicherheitsmittel (28, 128) eine Platte umfasst, die eine kreisförmige Öffnung mit einem Durchmesser größer als der Durchmesser des Sockels (15) umfasst, wobei die Öffnung von einer Lippe (25, 125) umrandet ist, wobei die Sicherheitsvorrichtung außerdem über Mittel zum Befestigen der Platte an dem Wärmeschild derart verfügt, dass die Lippe den Sockel mit einem minimalen Spiel umgibt.

2. Vorrichtung nach Anspruch 1, **dadurch gekennzeichnet, dass** die Platte Versteifungsrippen (26, 126) umfasst.

3. Vorrichtung nach einem der Ansprüche 1 oder 2, **dadurch gekennzeichnet, dass** die Befestigungsmittel der Platte eine Befestigungsschraube (19) umfassen, die auf der Oberfläche des Wärmeschilds eingerichtet und zur Außenseite des Katalysatorsiebes (10) gerichtet ist, wobei der Fuß der Schraube angepasst ist, um eine längliche Öffnung (27, 127) zu durchqueren, die in der Platte in Entfernung von der kreisförmigen Öffnung eingerichtet ist, wobei eine Mutter (30) es erlaubt, die Platte gegen den Wärmeschild (13) durch Zusammenwirken mit dem Fuß der Schraube zu blockieren.

4. Vorrichtung nach einem der Ansprüche 1 bis 3, **dadurch gekennzeichnet, dass** das Sicherheitsmittel (28, 128) ausgehend von einer Stahlplatte erhalten wird.

5. Vorrichtung nach einem der Ansprüche 1 bis 4, **dadurch gekennzeichnet, dass** das Sicherheitsmittel eine vorstehende Zone (21) des Wärmeschilds abdeckt.

6. Vorrichtung nach einem der Ansprüche 1 bis 5, **dadurch gekennzeichnet, dass** das Sicherheitsmittel (128) mindestens ein Mittel zum Halten von Verkabelung oder Röhren umfasst.

7. Vorrichtung nach Anspruch 6, **dadurch gekennzeichnet, dass** das Sicherheitsmittel seitlich durch mindestens einen Schenkel (130) verlängert ist, der mindestens zwei Backen (132) umfasst, die zum Halten eines Kabels oder einer zylindrischen Röhre in Position geeignet sind.

8. Vorrichtung nach Anspruch 7, **dadurch gekennzeichnet, dass** die Backen (132) eine Biegeelastizität haben.

9. Vorrichtung nach Anspruch 7, **dadurch gekennzeichnet, dass** die Backen (132) schwenkend beweglich sind.

10. Kraftfahrzeugmotor, der eine Sicherheitsvorrichtung zum Betrieb nach einem der Ansprüche 1 bis 9 umfasst.

## Claims

1. Safety device for operating a catalytic converter (10) comprising:
- a heat screen (13) installed substantially on a portion of the outer wall of the catalytic converter and comprising an opening (17) designed to have a measuring means fixed to the catalytic converter pass through it, said measuring means comprising a substantially cylindrical base (15) which is designed to make contact with with the catalytic converter,
- a safety means (28, 128) designed to be arranged on the heat screen,
**characterized in that** the safety means (28, 128) comprises a plate having a circular opening having a diameter which is greater than the diameter of the base (15), the opening being delimited by a lip (25, 125); said safety device further having means for fixing the plate to the heat screen such that the lip surrounds the base with a minimum clearance.

2. Device according to Claim 1, **characterized in that** the plate comprises stiffening ribs (26, 126).

3. Device according to either of Claims 1 or 2, **characterized in that** the means for fixing the plate comprise a fixing screw (19) arranged on the surface of the heat screen and facing toward the outside of the catalytic converter (10), the base of the screw being suitable for passing through an oblong opening (27, 127) arranged in the plate remote from the circular opening, a nut (30) permitting the plate to be locked in position against the heat screen (13) by cooperation with the base of the screw.

4. Device according to any one of Claims 1 to 3, **characterized in that** the safety means (28, 128) is obtained from a steel plate.

5. Device according to any one of Claims 1 to 4, **characterized in that** the safety means covers a protruding area (21) of the heat screen.

6. Device according to any one of Claims 1 to 5, **characterized in that** the safety means (128) comprises at least one means for retaining the cabling or tubes.

7. Device according to Claim 6, **characterized in that** the safety means is extended laterally by at least one branch (130) comprising at least two jaws (132) capable of retaining a cable or cylindrical tube in position.

8. Device according to Claim 7, **characterized in that** the jaws (132) have a flexural elasticity.

9. Device according to Claim 7, **characterized in that** the jaws (132) are pivotably movable.

10. Motor vehicle engine comprising an operating safety device according to any one of Claims 1 to 9.
